# EUROPEAN PATENT APPLICATION

(11) **EP 1 157 799 A1**
(43) Date of publication of application: **28.11.2001**
(21) Application number: 00111294.5
(22) Date of filing: 25.05.2000
(51) Int. Cl.: B29C 45/14

(54) **Housing shell for a communication device**

(71) Applicant: TELEFONAKTIEBOLAGET LM ERICSSON (publ), 126 25 Stockholm (SE)
(72) Inventor: Rademacher, Karl-Heinz, 90592 Schwarzenbruck (DE); Palmqvist, Fredrik, 24592 Staffanstorp (SE); Siivola, Matti, 29147 Kristianstadt (SE)
(74) Representative: Tonscheidt, Andreas

(57) **Abstract**

Method for manufacturing a housing shell (20,30) for a communication device with an inner surface (30'') and an outer surface (20',30') which is orientated toward a user. A design layer (33) is laminated onto one side of a basic-layer (32). Then the laminated layers (32,33) are mould in a deep drawing process in such a way that the design layer (33) becomes at least partly the outer surface (30') of the housing. Further a material (31) is injected on the side of the basic-layer (32) which is in opposite to the design layer (33).

## Description

The present invention relates to a housing shell for a communication device and a method for manufacturing such a housing shell, where the outer surface of the housing shell is at least partly made of a material other than plastic.

Today, housing for a communication device, e.g. a mobile or cordless phone, an organizer terminal or a mobile internet terminal, normally consists of one housing shell or an assembly of different housing shells. When using several housing shells, the housing shells are arranged in such a way that they protect the enclosed electrical components of the communication device. The housing shells are often made out of plastic materials. A widely used manufacturing technology is to form these housing shells in an injection moulding process.

A further known technique to use is the so-called Inmould-Foil-Technology for achieving a smooth surface of a housing shell. In this case a housing shell consists of two materials, a thin deep-drawn synthetic foil, e.g. a polycarbonate foil as a basic layer and an injectionmoulded plastic material. In a first step the polycarbonate foil is handled in a deep-drawing process to achieve the desired, e.g. smooth formed, shape of the final outer surface of the housing shell. Then, to fulfil the technical functions, it is necessary to cut out in a second step the openings, e.g. holes for the loudspeaker, the display and the keyboard. Additionally this pre-produced foil is inserted in an injection moulding device, positioned in a tight manner towards the outer surface and then, in a final step, a plastic material melt is injected behind the foil to obtain a mechanical rigid housing shell.

To design the outer surface of a housing shell for a communication device, previous existing solutions applied smooth formed shapes in combination with printed colors onto the surface of that housing shell. The Inmould-Foil-Technology is a manufacturing technology that easily allows the realization of printed surfaces of the housings shell. Therefore in a step, before the deep drawing process, one side of the synthetic foil is printed in a printing technology.

If there is a need to design the outer surface of a housing shell in an alternative manner and without printings, then separate design layers out of materials other than plastics are used, e.g. leather. However, the problem occurs when one of these materials is used. This is due to the fact that these materials have to be glued onto the housing shell, after the injection moulding process. This means that the technique is basically reduced to a hand made process. Therefore this kind of surface design is not applicable for mass manufacturing of mobile phone housings.

It is therefore a principal object of the invention to provide a method for industrial manufacturing a housing shell for a communication device having an outer surface, whereby a material other than plastic is used to design that outer surface.

This is achieved by the teaching of claim 1.

The proposed method combines a process of lamination with a following deep drawing and injection process. As a result, the method is particularly applicable for mass manufacturing of a housing shell, because the lamination step can be done without any information about the form and the dimensions of the desired housing shell. Therefore the first process step is more or less independent from the following process steps. Also it is advantageous to apply the proposed method to form an alternative and progressive surface design. Particular this allows a designer of a communication device to design a surface of a housing shell, which has a more futuristic look, but is also applicable in a mass manufacturing process.

Preferred embodiments of the design layer material are achieved by the dependent claims. For example real leather, artificial leather, rubber or fabrics allow alternative surface designs, which have a more futuristic look and are able to handled in an mass manufacturing process.

A housing shell for a communication device, according to claim 6, manufactured by using the preferred method is exceptionally reduced in cost, because such a housing shell can produced in an industrial mass manufacturing process.

A communication device having at least one housing shell, according to claim 7, wherein the housing shell is manufactured by using the preferred method is notably reduced in cost, because the used housing shell can be produced at a reduced cost in an mass manufacturing process.

In the following the invention will be further described according to the figures and by means of examples. The following figures show:
- Fig.1:: communication device with housing arrangement,
- Fig.2a-c:: different manufacturing steps of a housing shell by using the preferred method.

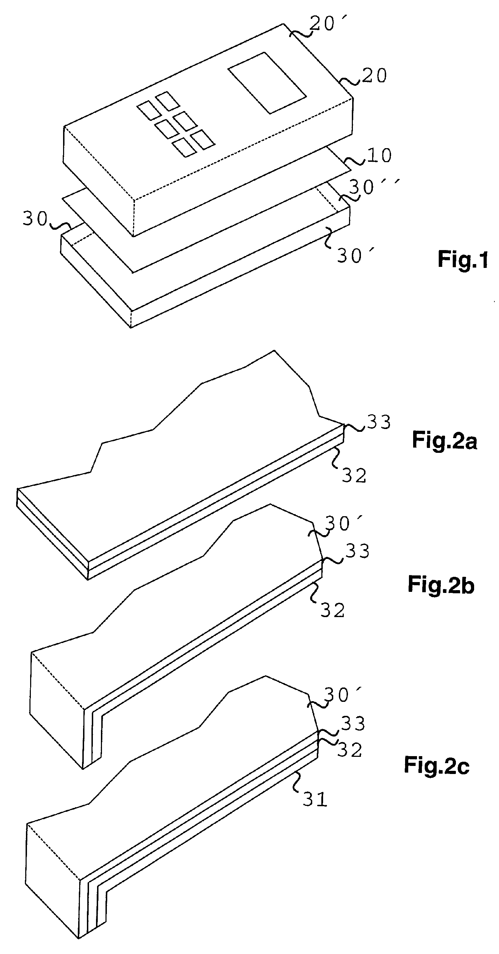

Fig.1 shows a housing arrangement for a communication device, e.g. a mobile phone, having two housing shells 20,30. Both housing shells are assembled in such a way, that they cover the electrical components 10 of the mobile phone. In this example one housing shell 20 will represent the front of the mobile phone with the integrated interfaces, e.g. keys, display etc. Therefore holes 25 are inserted into that housing shell 20. In contrary the other housing shell 30 will represent the back of the mobile phone. Furthermore, the outer surfaces 20', 30' of the housing shells 20, 30 are described as the surfaces orientated toward a user, this means that the outer surfaces are visible for a user. The inner surface 30'' of the back housing 30 is orientated toward the covered electrical components 10 and is normally not visible to a user.

To realize outer surfaces 20', 30', which have a more futuristic appearance or look, alternative materials other than plastics are used, e.g. fabrics, artificial leather, rubber, real leather etc. Thus, different methods to realize such an outer surface are conceivable. An important aspect of the present invention is to provide a method, which is applicable for industrial mass manufacturing. In the following, with respect to Fig.2a to 2c, the preferred method of the invention is described in more detail for a housing shell, where the complete outer surface is made of a leather material.

As shown in Fig. 2c, a preferred embodiment of a back housing shell consists of a basic layer 32, an injected material 31 and a design layer 33. The design layer 33 represents the outer surface 30' of the housing shell. The material for the basic layer 32 in the preferred embodiment is a thin synthetic foil or more specific a polycarbonate foil, having a thickness of around 0.2mm.

As shown in Fig.2a, in a first step the design layer material 33, e.g. leather is laminated in a suitable way to one side of the basic layer 32. This can be achieved for example by using adhesion or by means of a glue. Especially in the case, where the complete outer surface 30' is made from a material other then plastic, in this case leather, it is advantageous that both the design layer 33 as well as the basic layer 32 are available as flat material layers having dimensions greater than the dimensions of the desired housing shell. This first step of the preferred method therefore is particularly suitable for a mass production. This means that the lamination process can be done without any information about the form and the dimensions of the desired housing shell and therefore the first process step is more or less independent from the following process steps.

Then, as shown in Fig.2b, the laminated layers are handled in a deep-drawing process to achieve the desired shape of the final outer surface 30' of the housing shell 30. Preferably the design layer material 33 has elastic properties or is prepared in advance such, that the design layer material can be used in a deep drawing process.

Finally as shown in Fig.2c, the workpiece produced in the former described steps is combined with an injected material 31. Thus the workpiece is inserted into a suitable form and then a plastic melt is injected into that form to create the injected material part 31 on that site of the basic layer 32, opposite to the design layer 33. Therefore a mechanical rigid housing shell is obtained.

Even if the inventive process is described in the context of a housing shell, where the outer surface of that housing shell is fully covered by a design layer it is obvious for a person skilled in the art that the inventive process is not restricted to such an embodiment. That means that the preferred process is also usable for housing shells, where the design layer becomes only a part of the outer surface. Therefore, the design layer has to prepared in such a way, e.g. by cutting the desired portions of the design layer, that only this portions are laminated onto the basic layer in the first step. Here the dimensions from the housing shell as well as the orientation between the design and basic layer has to be known before the lamination process. In addition the two flat prepared material layers, the design as well as the basic layer, could be laminated easily in an industrial mass manufacturing process.

Thus, the production of a housing shell for a communication device is described above in the context, where the outer surface is completely covered by a design layer. It is also possible, that a communication device can have two or more assembled housing shells, where the outer surface of each housing shell is partly covered by a design layer in different ways. Also it should be obvious that assembled housing shells of a communication device can have design layers made of different materials.

As already outlined with respect to the preferred embodiment, the benefit of the invention is, that the method described above allows the realization of a futuristic industrial design surfaces with e.g. leather-, rubber- or fabric appearance of housing shells in mass production. Therefore it is clear for persons skilled in the art, that applying the method of the invention is also suitable to all thin and flexible materials which have elastic properties or are prepared in way such, that the disclosed method can be applied.

## Claims

1. Method for manufacturing a housing shell for a communication device, having an inner and outer surface, comprising the steps of :
- laminate a design layer (33) onto one side of a basic layer (32),
- mould the laminated layers in a deep drawing process in such a way that the design layer (33)becomes at least partly the outer surface (30') of the housing and,
- inject a material on the side of the basic layer (32) which is in opposite to the design layer.

2. Method according to claim 1, wherein
the basic layer is made of polycarbonate material.

3. Method according to one of the above claims, wherein the design layer is made of rubber.

4. Method according to one of the above claims, wherein the design layer is made of any kind of leather.

5. Method according to one of the above claims, wherein the design layer is made of fabrics.

6. Housing shell for a communication device manufactured by using a method of one of the claims 1-5.

7. A communication device having at least one housing shell, wherein the housing shell is manufactured by using a method of one of the claims 1-5.

8. A communication device according to claim 7, wherein the communication device is a mobile or cordless phone.
